# EUROPEAN PATENT APPLICATION

(11) **EP 4 075 661 A1**
(43) Date of publication of application: **19.10.2022**
(21) Application number: 21202378.2
(22) Date of filing: 13.10.2021
(51) Int. Cl.: H02N 2/00, H02N 2/02, H02N 2/10

(54) **OSCILLATING DRIVE ELEMENT AND DRIVE UNIT**

(30) Priority: 15.04.2021 WO PCT/EP2021/059801
(71) Applicant: MINISWYS SA, 2502 Biel (CH)
(72) Inventor: The designation of the inventor has not yet been filed
(74) Representative: Frei Patent Attorneys

(57) **Abstract**

A drive element serves for driving a **passive element** (4) relative to an **active element** (1). The active element (1) comprises a **resonator** (2) and an oscillating **excitation means** (23), and **at least one arm** (21) extending in an **arm direction** (21a) and comprising, at an outer end, a contact element (31) that is movable by way of oscillating movements of the arm (21), for driving the passive element (4). The arm (21) comprises, at its outer end, a **protrusion** (33) extending in a first direction relative to the arm direction (21a), **on a first side of the arm direction.** The arm's contact element (31) extends in a second direction relative to the arm direction (21a), **on a second side of the arm direction, opposite to the first side**.

## Description

The invention relates to the field of oscillatory drives. It relates to a drive element as described in the preamble of the corresponding independent claims.

US 6'768'245 B1, based on WO 01/41228 A1, discloses a piezoelectric motor, with which a drive element, comprising a piezo element and contact elements, is elastically suspended, and by the piezo element is set into oscillations for driving a further body or passive element, by way of the contact elements.

US 7'429'812 B1 discloses a piezoelectric drive unit with a resonator which comprises at least two arms, arranged to extend from the same side of the resonator. Contact elements are located at the outer ends of the arms, and can be moved together or apart by way of oscillating movements of the arm pair, by which means a relative movement of a passive element with respect to an active element carrying the resonator can be effected. The passive element can be made to be elastic in itself. Alternatively or in addition, the passive element can be elastically supported relative to the arm pair. These measures allow to transfer the oscillating movement and resulting forces exerted by the two arms in an efficient manner, and/or to compensate for imperfect alignment of the parts. In an embodiment, the contact elements at the outer ends of the arms face outwards, and the passive element comprises two surfaces facing one another, between which the resonator is arranged to move.

There is a need to provide a drive element with improved efficiency, that is with higher driving forces, preferably in both driving directions, given the same excitation and/or with higher efficiency of converting electrical driving power into mechanical power.

These objects are achieved by a drive element and a drive unit according to the claims.

The drive element serves for driving a **passive element** relative to an **active element.** The active element comprises
a **resonator** and at least one **excitation means** for exciting oscillations in the resonator,
the resonator comprising **at least one arm,** the at least one arm extending in a direction to be called **arm direction** from now on,
the resonator and the arm extending in a plane, to be called **reference plane** from now on,
the arm comprising, at an outer end of the arm, a contact element,
the contact element being movable by way of oscillating movements of the arm,
the passive element being arranged to be driven and moved relative to the active element by way of these oscillating movements;
the passive element comprising a contact area, the contact area being arranged to be in contact with the contact element.

Therein,
- the arm comprises, at its outer end, a **protrusion** extending in a first direction relative to the arm direction, the first direction being **within the reference plane and on a first side of the arm direction,** and
- the arm's contact element arranged at the arm's outer end extends in a second direction relative to the arm direction, the second direction being **within the reference plane and on a second side of the arm direction, opposite to the first side.**

Expressed differently, the protrusion and the contact element extend, in the reference plane, away from the arm at opposite sides of the arm.

Exciting oscillations in the resonator causes the arm to exhibit oscillating movements that typically are parallel to the reference plane. The term "parallel to" also encompasses the meaning "within", that is, parallel with zero distance.

Depending on the frequency of the oscillations excited by the excitation means, different modes of oscillation are generated. The presence of the protrusion introduces a concentration of mass that gives rise to varied modes of oscillation that would not be possible without this mass. Such modes can comprise a rotation around the concentration of mass of the protrusion. Different of modes of this kind can lead to oscillating movement of the contact element in different directions, which in turn causes the passive element to be driven in one direction or another.

In embodiments, the arm extends from an excitation region of the resonator at which the excitation means drives the oscillating movement of the arm.

In embodiments, a part of the arm before the outer end constitutes a first concentration of mass, the protrusion constitutes a second concentration of mass, and an elastic connection is present between the first and second concentration of mass, and the contact element is attached to and moves with the elastic connection and/or moves with the protrusion.

In embodiments, the protrusion moves with contact element as a unit, with the connection between them not being flexed in a significant manner. In other words, relative movement between the protrusion and the contact element is smaller than movement of their common centre of mass relative to the centre of mass of the arm. It can be two, five, ten times smaller.

In such embodiments, the connection between the contact element and the protrusion can be relatively stiff, compared to the connection between the arm and the combined contact element and contact element. In particular, stiffness can be twice or three or five times stiffer. Stiffness here is with respect to rotation of the respective elements relative to one another.

In embodiments, the contact element moves with the elastic connection and thereby also moves relative to the protrusion. In this case, relative movement between the protrusion and the contact element is on the same order as movement of either of them relative to the centre of mass of the arm. The relative movement of the contact element and protrusion corresponds to a change of the angle between them, that is, between the first and the second direction.

In embodiments, the protrusion has a mass, **called protrusion mass (Mp)**, and the contact element has a mass, called **contact element mass (Mc)**, and wherein the protrusion mass is larger than the contact element mass, in particular at least twice as large, even more particular at least three times as large.

In embodiments, the first direction is at an **angle** (α) **of 0° to 160°** to the arm direction, and/or the second direction is at an **angle** (β) **of -20° to -160°** to the arm direction.

In embodiments, the angle between the first direction and the second direction is between 20° and 270°.

In embodiments, the **stiffness** of the arm with respect to bending around an axis normal to the reference plane, has a **minimum value** at a location of the arm that is inward of an end section of the arm comprising the protrusion and optionally also the contact element.

This makes it easier for the end section with the protrusions to oscillate, by the arms flexing at the location with low stiffness. Here, in the context of a single arm, the term "inward" is understood in relation to the arm direction. In more detail, the location with the minimum value can be said to lie, seen along the length of the arm, between the end section and an excitation region. Preferably, it lies closer to the end section, or adjacent to the end section.

Such a trajectory of the stiffness along the length of the arm can be achieved by shaping the arm from a flat piece of material, and by controlling the stiffness by adjusting the width of the arm measured in the reference plane. Thus, an end section of the arm comprising the protrusions and optionally the contact elements can be separated from the remainder of the arm by a necking.

In embodiments, the resonator is shaped from a flat piece of material, and an end section of the arm comprising the protrusion and optionally the contact element is separated from the remainder of the arm by a **necking.**

A necking can be defined as a location along the length of the arm (that is, along the arm direction) where the width of the arm, seen in the reference plane has a value that is locally minimal. That is, the width of the arm, when seen along the length of the arm, before and after the necking is larger than the locally minimal value.

A necking can also be present for creating a location with minimal stiffness in a resonator that is not made from a flat piece of material or does not have a flat shape.

In embodiments, as a result the position of the necking and the position of the protrusion enable the contact element to perform a hammering movement that drives the passive element in a first direction of movement (e.g., to the left, or clockwise) for a first given range of frequency and to perform a hammering movement that drives the passive element in a second direction of movement (e.g., to the right, or counterclockwise) for a second range of frequencies.

Given a particular arm construction, frequency ranges with optimal driving movement in the two respective directions can be found by physical experiments or numerical simulation, by varying the excitation frequency over the entire feasible frequency range. Parameters for the arm itself, in particular for the masses, angles and linear dimension can be found by multidimensional optimisation based on numerical simulation of the arm.

In embodiments, the drive element comprises at least one of the following modes of oscillation:
- a first mode of oscillation in which the protrusion and the contact element together perform a rotating movement, in particular a rotating movement around the necking,
- a second mode of oscillation in which the protrusion performs a rotating movement approximately around a centre of mass of the protrusion and the contact element performs a linear movement;
- a third mode of oscillation in which the protrusion and the contact element perform different rotating movements, in particular with the protrusion rotating approximately around its centre of mass, and the contact element rotating approximately around the necking;
- a fourth mode of oscillation in which the protrusion and the contact element together perform a rotating movement, in particular a rotating movement around the centre of mass of the protrusion.

The drive unit serves for driving a **passive element** relative to an **active element.** The active element comprises at least two drive elements, the at least two drive elements in combination comprising a common resonator extending in a common reference plane, and a first arm and second arm arranged to drive a common passive element, and in particular wherein the first arm and second arm are arranged in mirror symmetry, with a resonator axis being axis of symmetry.

In embodiments, a resonator axis bisects an angle between the arm direction of the first arm and the arm direction of the second arm. In embodiments, the arm direction of the first arm and the arm direction of the second arm are parallel to one another.

In embodiments of the drive unit, the first arm comprises a first contact element and a first protrusion, and the second arm comprises a second contact element and a second protrusion, and wherein the first contact element and second contact element extend **toward** one another, and in particular where in the first protrusion and second protrusion extend **away from** one another.

In other words, the two arms are arranged to drive a passive element with contact areas arranged at the **inside** of the arms, and so for each arm the first direction (of the respective protrusion) points **outward,** away from the other arm, and the second direction (of the respective contact element) points **inward,** towards the other arm. This configuration can be called "inner drive", since the passive element is arranged at an inner side of the arms. Here, in the context of two arms, the term "inward" is understood in relation to a region between the two arms. Seen from one of the arms, a direction towards the other arm is "inward".

In embodiments of the drive unit the first arm comprises a first contact element and a first protrusion, and the second arm comprises a second contact element and a second protrusion, and wherein the first contact element and second contact element extend **away from** one another, and in particular where in the first protrusion and second protrusion extend **toward** one another.

In other words, the two arms are arranged to drive a passive element with contact areas arranged at the **outside** of the arms, and so for each arm the first direction (of the respective protrusion) points **inward,** towards the other arm, and the second direction (of the respective contact element) points **outward,** away from the other arm. This configuration can be called "outer drive".

An advantage of the inner drive over the outer drive configuration is that the forces between the active element and the passive element act against angular deviations of the passive element relative to the active element.

In embodiments of the drive element or the drive unit it is configured for a **pre-stress** force to be present between the contact element of the active element and the contact area of the passive element when the drive is not oscillating, that is, when the excitation means are not being excited.

The presence of the pre-stress force, in combination with the inner drive arrangement, causes, even when the drive is not oscillating, a stabilising force with regard to the angle between the passive element and the active element.

In embodiments of the drive element or the drive unit the arm comprises an active section extending from an excitation region, at which the excitation means is arranged to excite the oscillating movements of the arm, in the arm direction towards the outer end with the contact element, and a **counterweight** section, that extends from the excitation region in a direction opposite to the arm direction.

In embodiments of the drive element or the drive unit the resonator is shaped from a flat piece of material with elements of a further material added to the protrusion and/or to the contact element, in particular wherein the material added to the contact element is harder than the material of the resonator.

By adding material to the protrusion, the mass oscillating with the protrusion is increased. This allows to adjust the frequency of preferred modes of oscillation of the arm.

By adding material to the contact element, not only can its oscillating mass be adjusted, but the added material can act as a wear suppressing element. For this, it is arranged to contact the contact area of the passive element. It can be made of a material harder than the resonator. For example, it can be a ceramic material.

In embodiments of the drive element or the drive unit the resonator comprises a first surface and an opposed second surface, both parallel to the reference plane, and wherein one excitation means is arranged on the first surface and optionally wherein another excitation means is arranged on the second surface.

In embodiments of the drive element or the drive unit the passive element is arranged to translate along a **linear** movement axis, the linear movement axis being parallel to the reference plane, and in particular, for the drive unit, also parallel to the resonator axis.

In embodiments of the drive element or the drive unit the passive element is arranged to rotate around a **rotary** movement axis, the rotary movement axis being parallel to the reference plane, and in particular, for the drive unit, also perpendicular to the resonator axis.

In embodiments of the drive element or the drive unit the contact elements each comprise flat regions.

In embodiments of the drive element or the drive unit a resonator length is defined as the dimension of the resonator along the resonator axis, from the ends of the arms to the opposing ends of their counterweight sections, and wherein the extension (d) of each flat region, projected onto the reference plane, is between one tenth and one hundredth of the resonator length, in particular between one twentieth and one eightieth of the resonator length.

In embodiments of the drive element or the drive unit the length of the resonator is between three and five millimetres, in particular four millimetres, and the extension (d) of the flat region is between 0.05 millimetres and 0.15 millimetres, in particular between 0.08 millimetres and 0.12 millimetres, in particular 0.1 millimetres.

For all embodiments according to all aspects the following can be the case:
An arm extending from the connection region can be said to be connected to a connection region or excitation region at a proximal end of the arm, and its contact element is arranged at a distal end of the arm. Given two arms, a common direction in which the arms extend can correspond to a **resonator** axis. The resonator with the excitation means and without the arms can be mirror-symmetric with regard to the resonator axis, e.g. when seen in a projection onto the reference plane. The resonator including the arms can be substantially mirror-symmetric with regard to the resonator axis.

With regard to the resonator axis, generally one or more of the following can be the case:
- the connection region comprises at least one fixation or support area, at which the resonator is attached to a base, and which is located on the resonator axis; and/or
- the resonator axis, seen in a direction normal to the reference plane, passes through the centre of the excitation means; and/or
- the resonator axis lies in regions of the resonator and/or the excitation means where oscillation amplitudes are the lowest.

The oscillating movements of the arm or arms can cause corresponding contact elements to move towards one another and away from another, which can be the result of each contact element moving along a generally ellipsoidal path. Movement of each path can be clockwise or counter clockwise (seen in the plane of the resonator), and the orientation of the main axes of the ellipsoid can vary. The movement direction and orientation can be controlled by adjusting an excitation frequency of the excitation means. The excitation means typically is a piezoelectric element. Further details of such drives are described in the initially cited US'768'245 B1 and US'429'812 B1. The ellipsoidal movement can correspond to a very flat ellipse, and thereby can also correspond to an almost linear or entirely linear back and forth movement. In such cases the orientation of this back-and-forth movement determines the way in which the passive element is driven. In particular, the orientation of the movement, in combination with an amplitude of the movement also affects a driving force.

A contact element (part of the active element) touches the contact body (part of the passive element) at contact areas. It can be the case that the drive is configured for a pre-stress force to be present between the contact elements of the active element and the contact areas of the passive element when the drive is not oscillating, that is, when the excitation means are not being excited. Contact forces related to a pre-stress, if present, will be generally normal to the contact surfaces where the parts touch, and in particular normal to a contact surface in the contact area, in particular normal to a tangent plane thereof. The entirety of such a contact or pre-stress force can be normal to the contact surfaces, or such a force can be at an angle to the normal, with only a vector component of the force being normal to the contact surface.

It is understood that being in contact can mean being in contact intermittently during operation of the drive unit, as the oscillating arms intermittently are in contact and move away from the respective areas on the contact body.

In embodiments, the resonator of the active element is manufactured in one piece. For example, it is manufactured from a single piece of sheet material, for example, from a sheet of metal.

In embodiments, the resonator comprises a first surface and an opposed second surface, both parallel to the reference plane, and therein one excitation means is arranged on the first surface and optionally another excitation means is arranged on the second surface.

Typically, the **passive element is arranged to translate** along a linear movement axis, the linear movement axis being parallel to the reference plane, and in particular also parallel to the resonator axis.

In embodiments, **the passive element is arranged to rotate** around a rotary movement axis, the rotary movement axis being parallel to the reference plane, and in particular also perpendicular to the resonator axis.

In a **method** for operating the drive unit, the excitation means is supplied with an electrical voltage at different frequencies, thereby generating different movement patterns of the arm or arms and the contact regions, according to the frequency. Different movement patterns cause the passive element to move linearly, according to a degree of freedom defined by a suspension of the passive element relative to the active element. The suspension can be based on a slide bearing or a roller bearing, for example.

Throughout the present text, where parts are manufactured from a single piece of sheet material, for example, from a sheet of metal, this can done by a subtractive process, such as cutting or stamping or etching as well as by an additive process, such as selective laser melting, electron beam melting or direct metal laser sintering.

In embodiments, a wear suppressing element is arranged on the passive element in the contact areas.

In embodiments, the wear suppressing part is made of a material with a higher degree of hardness than a surrounding region of the passive element or is created by a hardening treatment of the material of the passive element.

In embodiments, the wear suppressing part is made of a ceramic material.

In embodiments, the contact elements each comprise a flat region.

In embodiments, a resonator length is defined as the dimension of the resonator along the resonator axis (for a symmetric arrangement of more than one arm) or along an arm direction (if only one arm is present), from the ends of the arm or arms to the opposing ends of the arms, in particular of their counterweight sections, and the extension of each flat region, projected onto the reference plane, is between one tenth and one hundredth of the resonator length, in particular between one twentieth and one eightieth of the resonator length.

In embodiments, the length of the resonator is between three and five millimetres, in particular four millimetres, and the extension of the flat region is between 0.05 millimetres and 0.15 millimetres, in particular between 0.08 millimetres and 0.12 millimetres, in particular 0.1 millimetres.

In embodiments, the surface of the resonator and/or the passive element is treated with high precision vibratory finishing or chemical polishing.

Further embodiments are evident from the dependent patent claims.

The subject matter of the invention will be explained in more detail in the following text with reference to exemplary embodiments which are illustrated in the attached drawings, which schematically show:
- Figure 1: a drive element according to a first embodiment;
- Figure 2-5: a model showing the main masses of the drive unit's arm and their movement in different modes of oscillation;
- Figure 7: a drive element according to a second embodiment;
- Figure 8-9: a drive unit comprising two drive elements arranged to drive a passive element arranged in between the drive's arms;
- Figure 10: a drive unit comprising two drive elements arranged to drive a passive element arranged outward of the drive's arms;
- Figure 11: a rotary drive unit; and
- Figure 12: a drive unit with two arms extending in opposite directions.

The reference symbols used in the drawings, and their meanings, are listed in summary form in the list of reference symbols. In principle, identical parts are provided with the same reference symbols in the figures.

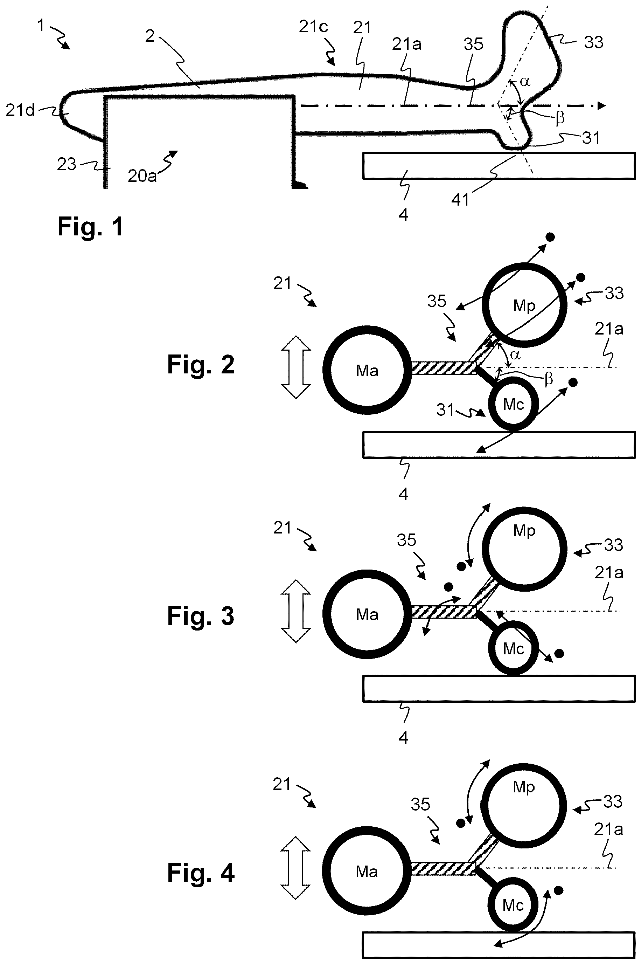

**Figure 1** schematically shows a drive element according to a first embodiment, with an active element 1 and a passive element 4. The active element 1 comprises a resonator 2 or resonator plate 2 and an excitation means 23. The excitation means 23 is arranged to drive an excitation region 20a of the resonator 2, causing oscillating movements of an arm 21 attached to the excitation region 20a. From the excitation region 20a of the resonator 2, the arm 21 extends in an arm direction 21a. The arm direction extends along a longitudinal axis of the arm 21. The longitudinal axis passes through a region where the arm 21 is attached to the resonator's excitation region and through a region where the protrusion 33 and contact element 31 are attached to the arm 21.

The resonator 2 and the arm 21 extend in parallel to a reference plane. At the end of the arm there is a contact element 31, designed to contact and move the passive element 4 by means of contacting a contact area 41 of the passive element 4. This contact area is not necessarily in a fixed relation to the moving passive element 4, rather it is the location where the contact region 31 currently contacts the passive element 4, as the passive element 4 rotates about a rotary movement axis or translates relative to the active element 1.

As explained in US 7'429'812 B1 cited above, an excitation frequency of a voltage generator driving the excitation means 23, which can be a piezoelectric element, can be varied, and depending on the frequency different modes of mechanical oscillations of the arms will be generated. For example, in one mode the contact region 31 will - seen in a projection onto the reference plane - rotate clockwise, in another it will rotate counter clockwise. As another example, in one mode the contact region 31 will move back and forth at a first angle, and in another mode at a second angle. Depending on the suspension of the passive element, i.e. rotary or linear or combined rotary-linear, the passive element will move accordingly.

The following embodiments operate according to the same basic principles. If not stated otherwise, the elements described so far, if present, have essentially the same function. The location of the excitation means 23 relative to the resonator 2 is represented in a schematic manner by a rectangle corresponding to the contour of the excitation means 23 attached to one or both sides of the resonator 2.

The protrusion 33 is linked to the remainder of the arm 21 by a necking 35. This necking 35 corresponds to a flexurally weaker region along the arm. That is, the stiffness of the arm to bending around an axis normal to the reference plane 28 is lower at the necking 35 than in other places. The necking 35 can thus be considered to be an elastic connection. When in operation, with the arm oscillating, the protrusion can exhibit an oscillating movement including a small rotation around the necking 35. This in turn can lead to a corresponding movement of the contact element that is arranged at the same end of the arm.

A first direction in which the protrusion 33 extends lies at a first angle α relative to the arm direction 21a. A second direction in which the contact element 31 extends lies at a second angle β relative to the arm direction 21a.

**Figures 2-4** show a first lumped mass model showing the main masses of the drive unit's arm and their movement in different modes of oscillation. A part of the arm 21 before its outer end corresponds to a first concentration of mass and is represented by an **arm mass Ma.** The arm mass preferably has a major component of an oscillating motion, indicated by a block arrow, in a direction normal to the arm direction. The protrusion 33 corresponds to a second concentration of mass and is represented by a **protrusion mass Mp.** The contact element 31 corresponds to a third concentration of mass and is represented by a **contact element mass Mc.** The lumped mass model also represents the first angle α and second angle β.

The necking 35 corresponds to an elastic connection between the arm 21 and the protrusion 33, with the contact element 31 moving with the elastic connection.

A first mode of oscillation, illustrated in **Figure 2****,** comprises Mp and Mc
- each performing an approximately translatory movement in a direction roughly equal to the first direction.
- The necking acts as an elastic element that is compressed and expanded in a linear direction.
- The contact element 31, by intermittent contact with the passive element 4 performs a hammering movement that drives the passive element 4 to the left.

A second mode of oscillation, illustrated in **Figure 3****,** comprises two sections of the elastic element
- rotating in opposite directions. The two sections lie at opposite sides relative to a location where the contact element 31 joins the elastic element.
- The necking as a whole acts as an elastic element that is bent and straightened.
- The contact element 31 by intermittent contact with the passive element 4 performs a hammering movement that drives the passive element 4 to the **right.**

A third mode of oscillation, illustrated in **Figure 4****,** comprises Mp and Mc
- rotating in opposite directions, with the contact element 31 swinging around a location where the contact element 31 joins the elastic element.
- The necking acts as an elastic element that is bent and straightened.
- The contact element 31 by intermittent contact with the passive element 4 performs a hammering movement that drives the passive element 4 to the **left.**

The above is a simplified representation of the main causes of main modes of oscillation for the case in which the connection between the contact element 31 and the protrusion 33 is **elastic to a similar degree** as the connection between the arm and the contact element 31.

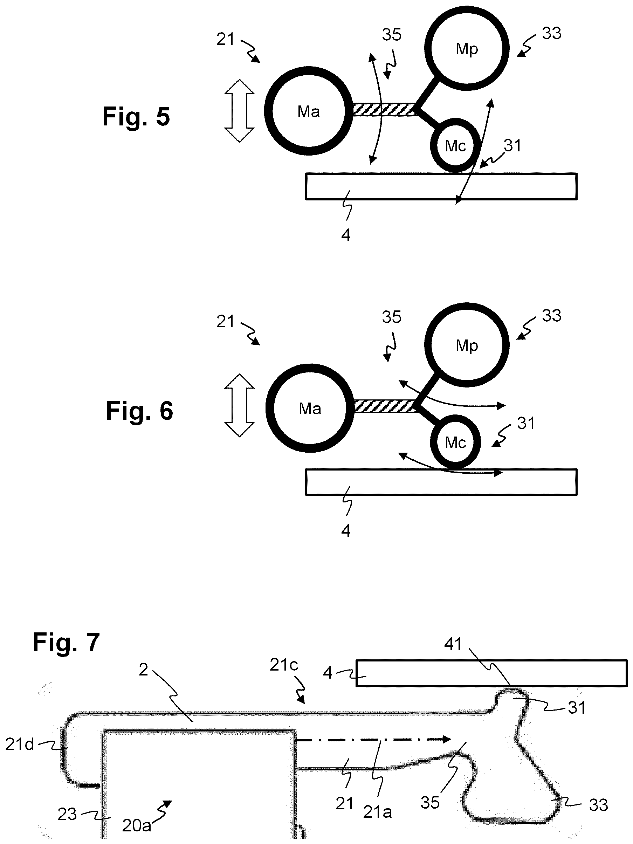

**Figures 5-6** show a second lumped mass model showing the main masses of the drive unit's arm and their movement in different modes of oscillation. In this model, the necking 35 corresponds to an elastic connection between the arm 21 and the combination of the contact element 31 and protrusion 33. The connection between the protrusion mass Mp and the contact element mass Mc is considered to be stiff when compared to the necking.

A first mode of oscillation, illustrated in **Figure 5****,** comprises Mp and Mc
- rotating as a unit around a point of rotation near the arm mass Ma.
- The necking acts as a flexible joint.
- The contact element 31, by intermittent contact with the passive element 4 performs a hammering movement that drives the passive element 4 to the **left.**

A second mode of oscillation, illustrated in **Figure 6****,** comprises Mp and Mc
- rotating as a unit around a point of rotation near a common centre of gravity.
- The necking acts as an elastic element that is compressed and expanded in a linear direction.
- The contact element 31 by intermittent contact with the passive element 4 performs a hammering movement that drives the passive element 4 to the **right.**

The above is a simplified representation of the main causes of the main modes of oscillation for the case in which the connection between the contact element 31 and the protrusion 33 is **relatively stiff,** compared to the connection between the arm and the combined contact element 31 and protrusion 33.

Depending on the relative stiffness and the relative masses of the protrusion and the arm, the modes of oscillation can lie between those of the first and the second lumped mass model.

In each case, the different modes of oscillation can be found by varying the excitation frequency and thereby the oscillation frequency. Preferred modes are those in which the contact element 31 performs a hammering movement against the passive element 4 in a first direction or in a second, opposite direction of a movement of the passive element 4. The direction of movement of the passive element 4 can be a translational or a rotational movement, or a combination.

**Figure** 7 shows a drive element according to a second embodiment. The elements shown and their operation are as in the embodiment of Figure 1. The difference is that in the embodiment of **Figure** 1 the passive element 4 is arranged the same side of the arm 21 as the excitation means 23, whereas in the embodiment of **Figure** 7 they are arranged on opposite sides.

The excitation means typically oscillates in an excitation direction that is normal to the arm direction 21a, or with at least a component of movement that is normal to the arm direction 21a. In other embodiments, the excitation direction is entirely parallel to the arm direction 21a.

Two or more drive elements as represented herein can be combined to form a drive unit, in which a common passive element 4 is driven by these drive elements.

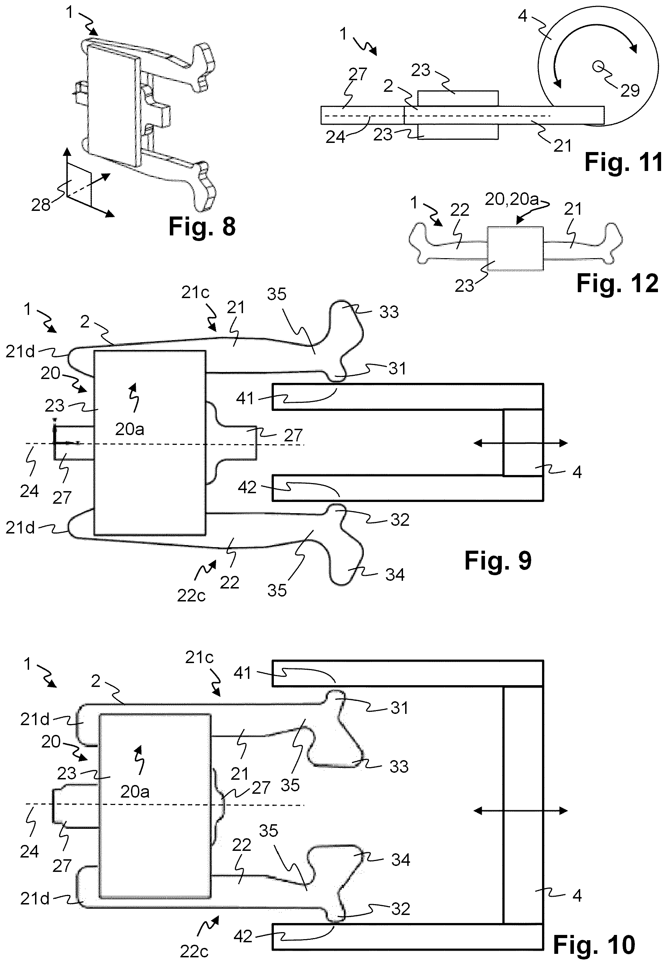

In the context of a drive with two arms, the arm 21, contact element 31, protrusion 33, contact area 41, presented so far are considered to be a first arm 21, first contact element 31, first protrusion 33, first contact area 41, etc. The corresponding mirror image elements are a second arm 22, second contact element 32, second protrusion 34, second contact area 42 etc. The arm direction of each arm typically is parallel to the resonator axis 24, or the resonator axis 24 can bisect the angle between the arm directions. The active element 1 comprises a resonator 2 or resonator plate 2 and excitation means 23. From a connection region 20 of the resonator 2, a first arm 21 and second arm 22 extend in the same direction (see **Figure 9** and **10****),** corresponding to a resonator axis 24, or in opposite directions (see **Figure 12**). The resonator 2 and the arms 21, 22 extend in parallel to a reference plane 28. At the end of each arm there are respective first contact elements 31 and second contact elements 32, designed to contact and move the passive element 4 by means of contacting first contact areas 41 and second contact areas 42 of the passive element 4. These contact areas are not necessarily in a fixed relation to the moving passive element 4, rather they are the locations where the contact regions 31, 32 currently contact the passive element 4, as the passive element 4 rotates about a rotary movement axis 29 (in Figure 11) or translates (in other embodiments) relative to the active element 1.

**Figure 8** shows an active element 1 and **Figure 9** a drive unit comprising two drive elements arranged to drive a passive element 4 arranged in between the drive's arms. This is called "inner drive configuration". The drive elements comprise protrusions 33, 34 extending outwards and contact elements 31, 32 extending inwards. The first arm 21 comprises a first protrusion 33 or projection in a direction projecting away from the second arm 22. The second arm 22, being essentially the mirror image of the first arm 21 with regard to the resonator axis 24, comprises a second protrusion 34 or projection in a direction projecting away from the first arm 21. Thus, both protrusions 33, 34 extend away from the resonator axis 24, that is, towards the outside of the drive.

The first arm 21 comprises a first contact element 31 projecting towards the second arm 22, that is, in a direction opposite to that in which the first protrusion 33 extends. Likewise, the second arm 22 comprises a second contact element 32 projecting towards the first arm 21, in a direction opposite to that in which the second protrusion 34 extends. Thus, both contact elements 31, 32 extend towards the resonator axis 24, that is, towards the inside of the drive. Here they come into contact with the respective first contact area 41 and second contact area 42 of the passive element 4.

The passive element 4 element is schematically represented by three rectangles, two of which correspond to two linear guides movable in relation to the active element 1. The two guides at the two sides of the passive element 4 are mechanically connected, as represented schematically by a third rectangle. The mechanical connection can be rigid, or resilient, in which case it can be part of an arrangement generating a pre-stress acting on the first contact element 31 and second contact element 32 via the first contact area 41 and second contact area 42.

The resonator 2 can comprise at least one or more fixation or support area(s) 27 at which the resonator is attached to a base (not shown). The fixation area(s) 27 typically is or are located on the resonator axis 24. They typically do not oscillate to a significant degree, being attached to the base. The fixation area(s) 27 can feature additional protrusion(s) such as 27a and 27b to facilitate the electrical connection of the resonator as well as its assembly on a base (not shown).

The presence of a pre-stress force acting from the contact elements 31, 32 on the contact areas 41, 42 causes, even when the drive is not oscillating, a stabilising force: if the passive element, starting with an initial orientation in which it is aligned with the resonator axis 24 (as in **Figure 9****),** is rotated around an axis normal to the reference plane, then the inward force exerted by the contact elements 31, 32 acts to return the orientation to the initial orientation.

**Figure 10** shows a linear drive unit with protrusions 33, 34 extending inwards and contact elements extending outwards. This is called "outer drive configuration". The first arm 21 comprises a first protrusion 33 or projection towards the second arm 22. The second arm 22, being essentially the mirror image of the first arm 21 with regard to the resonator axis 24, comprises a second protrusion 34 towards the first arm 21. Thus, both protrusions 33, 34 extend towards the resonator axis 24, that is, towards the inside of the drive.

The first arm 21 comprises first contact elements 31 projecting away from the second arm 22, that is, in a direction opposite to that in which the first protrusion 33 extends. Likewise, the second arm 22 comprises second contact element 32 projecting away from the first arm 21, in a direction opposite to that in which the second protrusion 34 extends. Thus, both contact elements 31, 32 extend away from the resonator axis 24, that is, towards the outside of the drive, here they come into contact with the respective first contact area 41 and second contact area 42 of the passive element 4.

In this configuration, the presence of a pre-stress force acting from the contact elements 31, 32 on the contact areas 41, 42 causes a destabilising outward force which acts to rotate the passive element, starting with an initial orientation in which it is aligned with the resonator axis 24 (as in **Figure 10****),** away from this orientation.

**Figure 11** shows a rotary drive unit, with the passive element 4 being arranged to rotate around an axis of rotation 29. The axis is normal to the resonator axis 24 and parallel to the reference plane 28. Such an arrangement can be implemented in combination with any of the embodiments presented herein, with one or more rotating passive elements 4 replacing corresponding linearly moving passive elements 4. In embodiments in which the contact elements 31, 32 face outward, the passive element 4 can comprise two rotating disc or rings - or only sections of discs or rings - that are distanced from one another along the axis of rotation 29. The first contact area 41 and second contact area 42 are located on surfaces of the discs or rings (or sections thereof) facing inward. In other embodiments, the contact elements 31, 32 face inward. In combination with embodiments with two pairs of arms, two rotating passive elements 4 can be present, each one driven by one of the two pairs of arms. In other embodiments, only one arm is present, and only one contact element.

**Figure 12** shows a first arm 21 and second arm 22 extending from a connection region 20 or excitation region 20a in opposite directions. A passive element (not shown) can be arranged to be driven by the contact elements of the two arms.

While the invention has been described in present embodiments, it is distinctly understood that the invention is not limited thereto, but may be otherwise variously embodied and practised within the scope of the claims.

## Claims

1. A drive element for driving a **passive element** (4) relative to an **active element** (1), wherein the active element (1) comprises
a **resonator** (2) and at least one **excitation means** (23) for exciting oscillations in the resonator (2),
the resonator (2) comprising **at least one arm** (21), the at least one arm (21) extending in a direction to be called **arm direction** (21a) from now on,
the resonator (2) and the arm (21) extending in a plane, to be called **reference plane** (28) from now on,
the arm (21) comprising, at an outer end of the arm, a contact element (31),
the contact element (31) being movable by way of oscillating movements of the arm (21),
the passive element (4) being arranged to be driven and moved relative to the active element (1) by way of these oscillating movements;
the passive element (4) comprising a contact area (41), the contact area (41) being arranged to be in contact with the contact element (31);
**characterised in that**
• the arm (21) comprises, at its outer end, a **protrusion** (33) extending in a first direction relative to the arm direction (21a), the first direction being **within the reference plane and on a first side of the arm direction**, and
• the arm's contact element (31) arranged at the arm's outer end extends in a second direction relative to the arm direction (21a), the second direction being **within the reference plane and on a second side of the arm direction, opposite to the first side.**

2. The drive element of claim 1, wherein a part of the arm (21) before the outer end constitutes a first concentration of mass, the protrusion (33) constitutes a second concentration of mass, and an elastic connection is present between the first and second concentration of mass, and the contact element (31) is attached to and moves with the elastic connection and/or moves with the protrusion (33).

3. The drive element of claim 1 or claim 2, wherein the protrusion (33) has a mass, **called protrusion mass (Mp)**, and the contact element (31) has a mass, called **contact element mass (Mc)**, and wherein the protrusion mass is larger than the contact element mass, in particular at least twice as large, even more particular at least three times as large.

4. The drive element of one of claims 1 to 3, wherein the first direction is at an **angle** (α) **of 0° to 160°** to the arm direction (21a), and/or the second direction is at an **angle** (β) **of -20° to -160°** to the arm direction.

5. The drive element of one of claims 1 to 4, wherein the angle between the first direction and the second direction is between 20° and 270°.

6. The drive unit of one of the preceding claims, wherein the **stiffness** of the arm with respect to bending around an axis normal to the reference plane, has a **minimum value** at a location of the arm that is inward of an end section of the arm comprising the protrusion (33) and optionally also the contact element (31).

7. The drive unit of one of the preceding claims, wherein the resonator (2) is shaped from a flat piece of material, and an end section of the arm comprising the protrusion (33) and optionally the contact element (31) is separated from the remainder of the arm by a **necking** (35).

8. The drive element of one of the preceding claims, comprising at least one of the following modes of oscillation:
• a first mode of oscillation in which the protrusion (33) and the contact element (31) together perform a rotating movement, in particular a rotating movement around the necking (35),
• a second mode of oscillation in which the protrusion (33) performs a rotating movement approximately around a centre of mass of the protrusion (33) and the contact element (31) performs a linear movement;
• a third mode of oscillation in which the protrusion (33) and the contact element (31) perform different rotating movements, in particular with the protrusion (33) rotating approximately around its centre of mass, and the contact element (31) rotating approximately around the necking (35);
• a fourth mode of oscillation in which the protrusion (33) and the contact element (31) together perform a rotating movement, in particular a rotating movement around the centre of mass of the protrusion (33).

9. A drive unit for driving a **passive element** (4) relative to an **active element** (1), wherein the active element (1) comprises at least two drive elements according to one of claims 1 to 8, the at least two drive elements in combination comprising a common resonator (2) extending in a common reference plane, and a first arm (21) and second arm (22) arranged to drive a common passive element (4), and in particular wherein the first arm (21) and second arm (22) are arranged in mirror symmetry, with a resonator axis (24) being axis of symmetry.

10. The drive unit of claim 9, wherein the first arm (21) comprises a first contact element (31) and a first protrusion (33), and the second arm (22) comprises a second contact element (32) and a second protrusion (34), and wherein the first contact element (31) and second contact element (32) extend **toward** one another, and in particular where in the first protrusion (33) and second protrusion (34) extend **away from** one another.

11. The drive unit of claim 9, wherein the first arm (21) comprises a first contact element (31) and a first protrusion (33), and the second arm (22) comprises a second contact element (32) and a second protrusion (34), and wherein the first contact element (31) and second contact element (32) extend **away from** one another, and in particular where in the first protrusion (33) and second protrusion (34) extend **toward** one another.

12. The drive element of one of claims 1 to 8, or the drive unit of one of claims 9 to 11, wherein the drive element or the drive unit is configured for a **pre-stress** force to be present between the contact element (31) of the active element (1) and the contact area (41) of the passive element (4) when the drive is not oscillating, that is, when the excitation means (23) are not being excited.

13. The drive element of one of claims 1 to 8 or claim 12, or the drive unit of one of claims 9 to 11, wherein the arm (21) comprises an active section (21c) extending from an excitation region (20a), at which the excitation means (23) is arranged to excite the oscillating movements of the arm (21), in the arm direction (21a) towards the outer end with the contact element (31), and a **counterweight** section (21d), that extends from the excitation region (20a) in a direction opposite to the arm direction (21a).

14. The drive element of one of claims 1 to 8 or claims 12 to 13, or the drive unit of one of claims 9 to 11, wherein the resonator (2) is shaped from a flat piece of material with elements of a further material added to the protrusion (33) and/or to the contact element (31), in particular wherein the material added to the contact element (31) is harder than the material of the resonator (2).

15. The drive element of one of claims 1 to 8 or claims 12 to 14, or the drive unit of one of claims 9 to 11, wherein the resonator (2) comprises a first surface and an opposed second surface, both parallel to the reference plane (28), and wherein one excitation means (23) is arranged on the first surface and optionally wherein another excitation means (23) is arranged on the second surface.

16. The drive element of one of claims 1 to 8 or claims 12 to 15, or the drive unit of one of claims 9 to 11, wherein the passive element (4) is arranged to translate along a **linear** movement axis (26), the linear movement axis (26) being parallel to the reference plane (28), and in particular, for the drive unit, also parallel to the resonator axis (24).

17. The drive element of one of claims 1 to 8 or claims 12 to 15, or the drive unit of one of claims 9 to 11, wherein the passive element (4) is arranged to rotate around a **rotary** movement axis (29), the rotary movement axis (29) being parallel to the reference plane (28), and in particular, for the drive unit, also perpendicular to the resonator axis (24).

18. The drive element of one of claims 1 to 8 or claims 12 to 17, or the drive unit of one of claims 9 to 11, wherein the contact elements (31, 32) each comprise flat regions.

19. The drive element or the drive unit of claim 18, wherein a resonator length is defined as the dimension of the resonator along the resonator axis (24), from the ends of the arms (21, 22) to the opposing ends of their counterweight sections, and wherein the extension (d) of each flat region, projected onto the reference plane (28), is between one tenth and one hundredth of the resonator length, in particular between one twentieth and one eightieth of the resonator length.

20. The drive element or the drive unit of claim 19, wherein the length of the resonator (2) is between three and five millimetres, in particular four millimetres, and the extension (d) of the flat region is between 0.05 millimetres and 0.15 millimetres, in particular between 0.08 millimetres and 0.12 millimetres, in particular 0.1 millimetres.
